(19) Europäisches Patentamt
European Patent Office
Office européen des brevets

(11) **EP 4 776 308 A1**

(12) **EUROPEAN PATENT APPLICATION**
published in accordance with Art. 153(4) EPC

(43) Date of publication:
**15.07.2026 Bulletin 2026/29**

(21) Application number: **24853143.6**

(22) Date of filing: **21.02.2024**

(51) International Patent Classification (IPC):
**G21C 17/00** (2006.01)

(52) Cooperative Patent Classification (CPC):
**G21C 17/00**

(86) International application number:
**PCT/CN2024/077873**

(87) International publication number:
**WO 2025/035726 (20.02.2025 Gazette 2025/08)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **11.08.2023 CN 202311017699**

(71) Applicants:
• **China Nuclear Power Technology Research Institute Co., Ltd.**
**Shenzhen, Guangdong 518031 (CN)**
• **China General Nuclear Power Corporation**
**Shenzhen, Guangdong 518028 (CN)**
• **CGN Power Co., Ltd.**
**Shenzen, Guangdong 518028 (CN)**

(72) Inventors:
• **LIU, Yani**
**Shenzhen, Guangdong 518031 (CN)**
• **WEI, Xiaoyan**
**Shenzhen, Guangdong 518031 (CN)**
• **LIU, Xiaohan**
**Shenzhen, Guangdong 518031 (CN)**
• **WANG, Tao**
**Shenzhen, Guangdong 518031 (CN)**
• **CHEN, Weilin**
**Shenzhen, Guangdong 518031 (CN)**
• **JIN, Xin**
**Shenzhen, Guangdong 518031 (CN)**

(74) Representative: **Michalski Hüttermann & Partner mbB**
**Kaistraße 16A**
**40221 Düsseldorf (DE)**

(54) **HEAT AND MASS TRANSFER ANALYSIS METHOD AND APPARATUS FOR CORROSION PRODUCT IN NUCLEAR REACTOR, AND DEVICE**

(57) A heat and mass transfer analysis method and apparatus for a corrosion product in a nuclear reactor, a computer device, a storage medium, and a computer program product. The heat and mass transfer analysis method for a corrosion product in a nuclear reactor includes: obtaining an average thermal conductivity of the corrosion product, and determining temperature distributions in the corrosion product when a coolant in the corrosion product is in a saturated state, a nucleate boiling state, and a dryout state respectively based on the average thermal conductivity (S202); determining a flow velocity distribution of the coolant in the corrosion product based on a pressure distribution in the corrosion product (S204); obtaining a concentration relation expression representing a relationship between a concentration of boric acid and concentrations of other soluble substances in the coolant, and determining concentration distributions of other soluble substances based on the concentration relation expression and the concentration of boric acid (S206); and analyzing a process of heat and mass transfer within the corrosion product based on the temperature distributions, the flow velocity distribution, and concentration distributions of soluble substances, obtaining a concentration of boron enriched within the corrosion product, and obtaining the total amount of boron deposited based on the concentration of the enriched boron (S208).

**EP 4 776 308 A1**

an average thermal conductivity of the corrosion product in the nuclear reactor is obtained, and temperature distributions in the corrosion product when a coolant in the corrosion product is in a saturated state, a nucleate boiling state, and a dryout state respectively are determined based on the average thermal conductivity.

S202

a flow rate distribution of the coolant in the corrosion product is determined based on a pressure distribution in the corrosion product

S204

a concentration relation expression representing a relationship between concentrations of soluble substances in the coolant is obtained, and concentration distributions of other soluble substances are determined based on the concentration relation expression and the concentration of boric acid

S206

a process of heat and mass transfer within the corrosion product is analyzed based on the temperature distributions, the flow rate distribution, and the concentration distributions of the soluble substances, a concentration of boron enriched within the corrosion product is obtained, and the total amount of boron deposited is obtained based on the concentration of the enriched born, where the soluble substances include the boric acid and other soluble substances

S208

FIG. 2

**Description**

**CROSS-REFERENCE TO RELATED APPLICATIONS**

The present application claims priority to Chinese Patent Application No. 202311017699.8, entitled "Heat and Mass Transfer Analysis Method and Apparatus for Corrosion Product in Nuclear Reactor, and Device", and filed on August 11, 2023, the content of which is expressly incorporated herein by reference in its entirety.

**TECHNICAL FIELD**

The present application relates to the field of heat and mass transfer analysis technology, particularly to a heat and mass transfer analysis method and apparatus for a corrosion product in a nuclear reactor, a computer device, a storage medium, and a computer program product.

**BACKGROUND**

During operation, a pressurized water reactor may generate a large amount of oxidation and corrosion products, mainly including iron ions, nickel ions, and oxides thereof. These corrosion products, under the action of subcooled nucleus boiling, are deposited on the surface of the fuel cladding on the upper portion of the reactor core, forming a thin, loose, porous scale layer, which is called a corrosion product. The presence of the corrosion product increases the thermal resistance of the fuel rod, leading to a deterioration in the heat transfer performance. Furthermore, due to the loose and porous chimney structure, boron tends to accumulate more in the corrosion product, resulting in the boron not evenly distributed in the axial direction of the fuel rod, which may further induce a core power drift phenomenon.

Currently, the heat and mass transfer process in the corrosion product is mainly analyzed by calculating the temperature, flow velocity, pressure, and solute concentration distribution in the deposition layer. However, due to the relatively small number of parameters used, the accuracy of the heat and mass transfer analysis is reduced.

**SUMMARY**

In view of this, for the above technical problem, it is necessary to provide a heat and mass transfer analysis method and apparatus for a corrosion product in a nuclear reactor, a computer device, a computer-readable storage medium, and a computer program product capable of accurately analyzing heat and mass transfer.

In the first aspect of the present application, a heat and mass transfer analysis method for a corrosion product in a nuclear reactor is provided, including:

obtaining an average thermal conductivity of the corrosion product in the nuclear reactor, and determining temperature distributions in the corrosion product when a coolant in the corrosion product is in a saturated state, a nucleate boiling state, and a dryout state respectively based on the average thermal conductivity;
determining a flow velocity distribution of the coolant in the corrosion product based on a pressure distribution in the corrosion product;
obtaining a concentration relation expression representing a relationship between a concentration of boric acid and concentrations of other soluble substances in the coolant, and determining concentration distributions of other soluble substances based on the concentration relation expression and the concentration of boric acid; and
analyzing a process of heat and mass transfer within the corrosion product based on the temperature distributions, the flow velocity distribution, and concentration distributions of soluble substances, obtaining a concentration of boron enriched within the corrosion product, and obtaining the total amount of boron deposited based on the concentration of the enriched boron, wherein the soluble substances include the boric acid and other soluble substances.

In an embodiment, obtaining the average thermal conductivity of the corrosion product includes:

obtaining a porosity of the corrosion product, a solid thermal conductivity of the corrosion product, and a liquid thermal conductivity of the coolant in the corrosion product; and
determining the average thermal conductivity of the corrosion product based on the porosity, the solid thermal conductivity, and the liquid thermal conductivity.

In an embodiment, determining the temperature distribution in the corrosion product when the coolant in the corrosion product is in the saturated state based on the average thermal conductivity includes:

obtaining a thickness of the corrosion product; and

determining a saturation temperature distribution of the corrosion product when the coolant is in the saturated state based on the average thermal conductivity and the thickness, wherein the temperature distributions include the saturation temperature distribution.

In an embodiment, determining the temperature distribution in the corrosion product when the coolant in the corrosion product is in the nucleate boiling state based on the average thermal conductivity includes:

obtaining a wick boiling relation expression representing a relationship between a thickness of the corrosion product and a temperature within the corrosion product when the coolant is in the nucleate boiling state; and

determining the temperature distribution within the corrosion product under the nucleate boiling state based on a thickness distribution of the corrosion product and the wick boiling relation expression, wherein the temperature distributions include the temperature distribution under the nucleate boiling state.

In an embodiment, the method further includes:

determining a temperature relation expression representing a relationship between a thickness of the corrosion product and a temperature within the corrosion product, a flow velocity relation expression representing a relationship between a pressure within the corrosion product and a flow velocity of the coolant, and a concentration relation expression;

determining, based on the temperature relation expression and the thickness of the corrosion product, the $n$-th temperature distribution in the corrosion product in the $n$-th iteration step and the $(n+1)$-th temperature distribution in the corrosion product in the $(n+1)$-th iteration step, and determining a temperature difference value between the $n$-th temperature distribution and the $(n+1)$-th temperature distribution, wherein the $n$-th iteration step and the $(n+1)$-th iteration step are adjacent iteration steps, and $n$ is a positive integer;

determining, based on the flow velocity relation expression and the pressure in the corrosion product, the $n$-th flow velocity distribution of the coolant in the $n$-th iteration step and the $(n+1)$-th flow velocity distribution of the coolant in the $(n+1)$-th iteration step, and determining a flow velocity difference value between the $n$-th flow velocity distribution and the $(n+1)$-th flow velocity distribution;

determining, based on the concentration relation expression and the concentration of boric acid in the coolant, the $n$-th concentration distributions of other soluble substances in the $n$-th iteration step and the $(n+1)$-th concentration distribution of the coolant in the $(n+1)$-th iteration step, and determining a concentration difference value between the $n$-th concentration distribution and the $(n+1)$-th concentration distribution; and

determining maximum difference values in the temperature difference value, the flow velocity difference value, and the concentration difference value, and when the maximum difference values are less than preset difference thresholds respectively, determining the $n$-th flow velocity distribution as the flow velocity distribution, the $n$-th temperature distribution as the temperature distribution, and the $n$-th concentration distribution as the concentration distributions of other soluble substances.

In an embodiment, determining the temperature distribution in the corrosion product when the coolant in the corrosion product is in the dryout state based on the average thermal conductivity includes:

obtaining a three-dimensional coordinate system relation expression representing a relationship between a thickness of the corrosion product and a temperature within the corrosion product when the coolant is in the dryout state;

determining a dryout temperature distribution of the corrosion product based on the thickness of the corrosion product and the three-dimensional coordinate system relation expression, wherein the temperature distributions include the dryout temperature distribution.

In the second aspect of the present, a heat and mass transfer analysis apparatus for a corrosion product in a nuclear reactor is provided, including:

a temperature distribution determination module, configured to obtain an average thermal conductivity of the corrosion product in the nuclear reactor, and determine temperature distributions in the corrosion product when a coolant in the corrosion product is in a saturated state, a nucleate boiling state, and a dryout state respectively based on the average thermal conductivity;

a flow velocity distribution determination module, configured to determine a flow velocity distribution of the coolant in the corrosion product based on a pressure distribution in the corrosion product;

a concentration distribution determination module, configured to obtain a concentration relation expression representing a relationship between a concentration of boric acid and concentrations of other soluble substances in the coolant, and determine concentration distributions of other soluble substances based on the concentration relation expression and the concentration of boric acid; and

an analysis module, configured to analyze a process of heat and mass transfer within the corrosion product based on the temperature distributions, the flow velocity distribution, and concentration distributions of soluble substances, obtain a concentration of boron enriched within the corrosion product, and obtain the total amount of boron deposited based on the concentration of the enriched boron, wherein the soluble substances comprise the boric acid and other soluble substances.

In the third aspect of the present application, a computer device is provided, including a processor and a memory storing a computer program. The processor, when executing the computer program, implements the steps of the above-mentioned method.

In the fourth aspect of the present application, a computer-readable storage medium is provided, on which a computer program is stored. The computer program, when executed by a processor, causes the processor to implement the steps of the above-mentioned method.

In the fifth aspect of the present application, a computer program product is provided, including a computer program. The computer program, when executed by a processor, causes the processor to implement the steps of the above-mentioned method.

In the aforementioned heat and mass transfer analysis method and apparatus for the corrosion product in the nuclear reactor, the computer device, the storage medium, and the computer program product, the temperature distributions in the corrosion product are analyzed based on the average thermal conductivity of the corrosion product when the coolant is in the saturated state, nucleate boiling state, and dryout state respectively, so that the impact of the state of the coolant on the heat transfer of the corrosion product is obtained, allowing for a comprehensive analysis of the heat transfer within the corrosion product. Furthermore, the flow velocity distribution of the coolant is determined according to the pressure distribution within the corrosion product, the concentrations of other soluble substances in the corrosion product are determined according to the concentration relation expression and the concentration of boric acid in the corrosion product, and the heat and mass transfer is analyzed in combination with the temperature distributions, the flow velocity distribution, and the concentration distributions of the soluble substances, so that it is possible to take into account the coupling relationship among the temperature distributions, the flow velocity distribution, and the concentration distributions of soluble substances, which allows for a comprehensive analysis of the process of the heat and mass transfer, thereby obtaining more accurate concentration of boron enriched within the corrosion product, and thus obtaining the total amount of boron deposited.

## BRIEF DESCRIPTION OF THE DRAWINGS

FIG. 1 is an application environment diagram of a heat and mass transfer analysis method for a corrosion product in a nuclear reactor according to an embodiment.

FIG. 2 is a flow chart showing a heat and mass transfer analysis method for a corrosion product in a nuclear reactor according to an embodiment.

FIG. 3 is a flow chart showing a heat and mass transfer analysis method for a corrosion product in a nuclear reactor according to another embodiment.

FIG. 4 is a structural block diagram illustrating a heat and mass transfer analysis apparatus for a corrosion product in a nuclear reactor according to an embodiment.

FIG. 5 is an internal structure diagram of a computer device according to an embodiment.

## DETAILED DESCRIPTION

To make the purpose, technical solution, and advantages of the present application clearer, the following detailed description is provided in conjunction with the accompanying drawings and embodiments. It should be appreciated that the specific embodiments described herein are merely illustrative of the present application and are not intended to limit the present application.

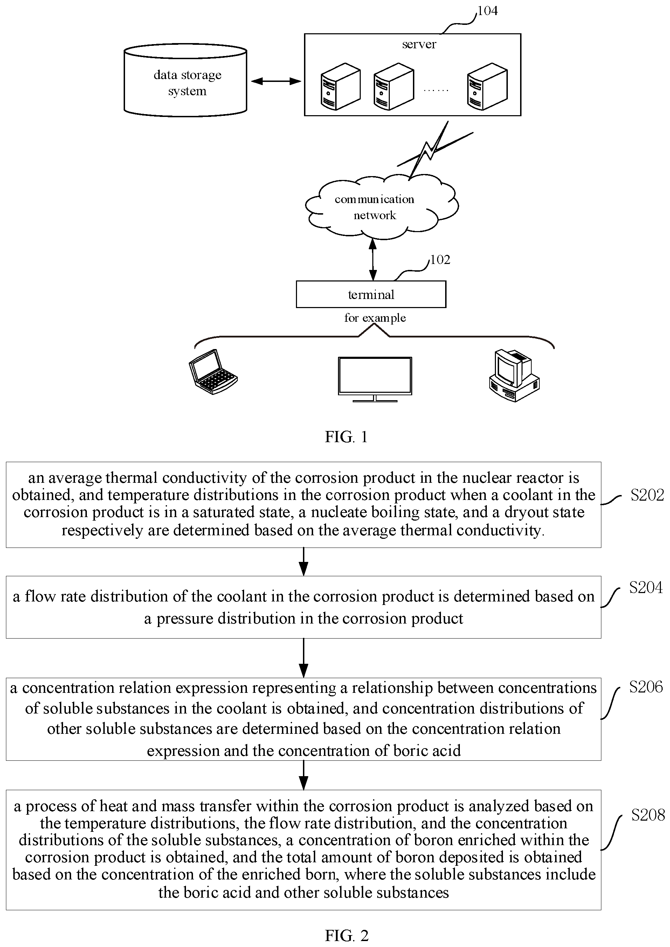

A heat and mass transfer analysis method for a corrosion product in a nuclear reactor provided in the embodiments of the present application can be applied to the application environment shown in FIG. 1. A terminal 102 is in communication with a server 104 via a network. A data storage system may store data that the server 104 needs to process. The data storage system may be integrated on the server 104, or may be placed on a cloud or other network servers. The server 104 obtains an average thermal conductivity of the corrosion product in the nuclear reactor, and determines a temperature distribution in the corrosion product according to the average thermal conductivity when a coolant in the corrosion product is in a saturated state, a nucleate boiling state, and a dryout state respectively. The server 104 determines a flow velocity distribution of the coolant in the corrosion product according to the pressure distribution in the corrosion product. The server 104 obtains a concentration relationship equation representing a relationship between a boric acid concentration and concentrations of other soluble substances in the coolant, and determines a concentration distribution of other soluble substances according to the concentration relationship equation and the boric acid concentration. The server 104 analyzes the heat and mass transfer in the corrosion product according to the obtained temperature distribution, flow velocity distribution, concentration distribution of soluble substances, and the total amount of boron deposition in the corrosion product, and obtains an analysis result. The terminal 102 may be, but is not limited to, various personal computers, laptops, tablets, Internet of Things (IoT) devices, etc. The server 104 may be implemented using an independent server or a server cluster consisting of multiple servers.

In an embodiment, as shown in FIG. 2, a heat and mass transfer analysis method for a corrosion product in a nuclear reactor is provided. The method is applied to the server 104 in FIG. 1 as an example for illustration, and the method includes the following steps.

Step 202: an average thermal conductivity of the corrosion product in the nuclear reactor is obtained, and temperature distributions in the corrosion product when a coolant in the corrosion product is in a saturated state, a nucleate boiling state, and a dryout state respectively are determined based on the average thermal conductivity.

The corrosion product refers to a thin, loose, and porous scale layer formed by deposition of oxidative corrosion products, mainly iron ions, nickel ions, and their oxides on a surface of a fuel cladding under the action of subcooled nucleate boiling, for example, chalk river unidentified deposit (CRUD).

The average thermal conductivity is also referred to as a thermal conductivity coefficient, which is an inherent ability to transfer or conduct heat, and is obtained based on a solid thermal conductivity of the corrosion product and a fluid thermal conductivity of the coolant. The temperature distribution refers to the variation of temperature with spatial position within a given area at a given time. For example, at a current time point, there are positions *a* and *b* in a region *A,* the temperature at position *a* is *x,* and the temperature at position *b* is *y.* By combining the temperatures at the two positions, the temperature distribution in the region A at the current time point can be obtained.

The saturated state refers to a state in which the number of molecules entering the space per unit time is equal to the number of molecules returning to the liquid, i.e., the evaporation and condensation are in a dynamic equilibrium state. At this point, although the evaporation and condensation are still occurring, the density of vapor molecules in the space no longer increases, and such a state is referred to as the saturated state. When the coolant is in the saturated state, a porous region of the corrosion product is filled with the liquid, and the heat transferred from the cladding surface to the fuel rod is transferred to the coolant through the corrosion product in the form of thermal conduction. By performing the temperature analysis under the saturated state, it can predict the temperature distribution in advance and avoid fuel damage caused by excessively high local temperature. The nucleate boiling state refers to a state in which superheat increases, bubbles are continuously generated on a wall surface, rising and growing in the liquid. As heat transfer proceeds, when the temperature at the CRUD cladding interface reaches the nucleate boiling initiation temperature, nucleate boiling starts from the bottom of the CRUD layer, and the CRUD is filled with coolant and steam. The coolant fills the small pore regions, and the steam fills the large pore regions, i.e., the chimney regions. The coolant and steam flow along low-resistance paths. The coolant is drawn into the bottom of the CRUD under the action of capillary force, which is the contact part between the CRUD and the fuel cladding, forming bubbles and further forming steam. The steam escapes through the chimneys into the coolant and is then carried away by the coolant flow. Nucleate boiling heat transfer enhances the heat transfer inside the CRUD, significantly increasing the overall heat transfer coefficient between the fuel rod and the coolant. The dryout state occurs when the coolant required for nucleate boiling is more than that provided by the capillary force, causing the liquid-vapor separation in the steam chimneys to break down. In this case, the coolant dries up at the interface between the corrosion product and the cladding, forming a gas film, which reduces the total heat transfer coefficient of the CRUD.

Optionally, the server first determines the average thermal conductivity of the corrosion product based on the solid thermal conductivity of the corrosion product and the fluid thermal conductivity of the coolant, then determines a temperature distribution in the corrosion product when the coolant is in the saturated state according to the average thermal conductivity, determines a temperature distribution in the corrosion product when the coolant is in the nucleate boiling state according to the average thermal conductivity, and determines a temperature distribution in the corrosion product when the coolant is in the dryout state according to the average thermal conductivity.

Step 204: a flow velocity distribution of the coolant in the corrosion product is determined based on a pressure distribution in the corrosion product.

The pressure distribution is obtained through a pressure control equation and boundary conditions for the pressure control equation. The flow velocity distribution is obtained after the pressure distribution is obtained, and by solving a relationship between a pressure and a flow velocity determined by Darcy's law based on the obtained pressure distribution. That is, the pressure distribution serves as an independent variable, the flow velocity distribution serves as a dependent variable in the relationship, and other parameters are known. Accordingly, the flow velocity distribution of the coolant at various positions in the corrosion product can be obtained. The pressure distribution refers to a collection of specific pressure values at various positions in the corrosion product of the nuclear reactor. For example, at the current time point, there are positions *a* and *b* in region *A,* the pressure at the position *a* is *x,* and the pressure at the position *b* is *y.* By combining the pressures at the two positions, the pressure distribution in region A at the current time point can be obtained. The flow velocity distribution refers to a collection of specific flow velocity values of the coolant at various positions in the corrosion product of the nuclear reactor. At different time points, the pressure or flow velocity at the same position may be the same or different.

The pressure control equation is expressed as $\nabla\left(-\phi\rho_{\mathrm{w}}\dfrac{\kappa}{\mu_{\mathrm{w}}}\nabla p\right)=0$. The boundary conditions for the pressure control equation are expressed as: $\left.-\dfrac{\kappa}{\mu_{\mathrm{w}}}\dfrac{\partial p}{\partial x}\right|_{x=\delta_c}=0$, $p|_{x=0}=p_f$, and $\left.-\dfrac{\kappa}{\mu_{\mathrm{w}}}\dfrac{\partial p}{\partial r}\right|_{r=r_c}=-\dfrac{k_m}{\rho_{\mathrm{w}}h_{fg}}\dfrac{\partial T}{\partial r}$,

where $\rho_{\mathrm{w}}$ represents the density of the coolant in kg/m$^3$; $\kappa$ represents permeability of the corrosion product, i.e., CRUD permeability; $\mu_{\mathrm{w}}$ represents a dynamic viscosity of the coolant in N·s/m$^2$; $p_f$ represents the pressure in a main flow region of the coolant in MPa; $p$ and $\nabla p$ both represent an intensity of pressure inside the corrosion product; $\phi$ represents a porosity of the corrosion product; $T$ represents the temperature of the corrosion product, and is a variable; $r_c$ represents an average pore radius; $r$ represents a pore radius and is a variable; $x$ represents a depth at a certain position in the corrosion product; $\delta_c$ represents an average thickness of the CRUD in the deposition region; and $h_{fg}$ represents latent heat of vaporization of the coolant in kJ/mol.

The magnitude of the CRUD permeability $\kappa$ is mainly determined by the *n*-th fractal dimension $D_f$ and the (*n*+1)-th fractal dimension $D_T$ as follows:

$$\kappa=\frac{\left(\pi D_f\right)^{\frac{1-D_T}{2}}\left[4\left(2-D_f\right)\right]^{\frac{1+D_T}{2}}}{128\left(3+D_T-D_f\right)}\left(\frac{\phi}{1-\phi}\right)^{\frac{1+D_T}{2}}\lambda_{\max}^2,\quad D_f=d_E-\frac{\ln\phi}{\ln\dfrac{\lambda_{\min}}{\lambda_{\max}}},$$

$$D_T=1+\frac{\ln\tau}{\ln\dfrac{L}{\left(\dfrac{\lambda_{\min}+\lambda_{\max}}{2}\right)}},\quad \tau=\frac{1}{2}\left[1+\frac{1}{2}\sqrt{1-\phi}+\sqrt{1+\phi}\frac{\sqrt{\left(\dfrac{1}{\sqrt{1-\phi}}-1\right)^2+\dfrac{1}{4}}}{1-\sqrt{1-\phi}}\right],$$

where $d_E$ represents an effective hydraulic diameter in μm; $\lambda_{min}$ and $\lambda_{max}$ represent the minimum and maximum pore diameters in μm, respectively; $\phi$ represents the porosity of the corrosion product; $L$ represents a thickness of coolant bubble growth; and $\tau$ represents a degree of curvature of the coolant flowing over the CRUD surface.

According to Darcy's law, the relation expression between the flow velocity $\bar{v}$ and the pressure $\nabla p$ of the coolant in the corrosion product is expressed as: $\vec{v}=-\dfrac{\kappa}{\mu_w}\nabla p$. That is, the pressure $\nabla p$ is substituted into the relation expression as an independent variable to solve for the flow velocity.

Optionally, the server determines the relation expression between the pressure and the flow velocity based on the Darcy's law, then solves for the pressure distribution of the coolant in the corrosion product according to the pressure control equation and the boundary conditions for the pressure control equation, and finally determines the flow velocity distribution of the coolant in the corrosion product according to the pressure distribution and the relation expression between the flow velocity and the pressure.

Step 206: a concentration relation expression representing soluble substances in the coolant is obtained, and concentration distributions of other soluble substances are determined based on the concentration relation expression and the concentration of boric acid.

The concentration of the boric acid in the coolant is obtained by explicitly solving a kinetic equation. The concentrations of other soluble substances refer to the concentrations of soluble substances in the coolant other than the boric acid. The concentrations of other soluble substances can be obtained based on the concentration of the boric acid through an ordinary differential equation or an algebraic calculation. The concentration distribution of the soluble substances refers to a collection of specific concentration values of the soluble substances in the coolant at various positions in the nuclear reactor. A concentration calculation formula for each soluble substance is expressed as follows: $[(\vec{v} \cdot \vec{x}) - \Delta\tau D_i]\nabla C_i + \sum[C_{i,source} - C_{i,sink}] = 0$, where $C_i$ represents a concentration of the $i$-th soluble substance in mol/L; $C_{i,source}$ represents to a formation concentration of the $i$-th soluble substance; $C_{i,sink}$ represents a deposition concentration of the $i$-th soluble substance in mol/L; $D_i$ represents a diffusion coefficient of the $i$-th soluble substance related to the coolant temperature; $\tau$ represents the degree of curvature of the coolant flowing over the CRUD surface; $\vec{x}$ represents a vector depth at a certain position in the CRUD; and $\vec{v}$ represents a vector flow velocity of the coolant at a certain position in the CRUD. The boundary conditions for the formulas for calculating the concentrations of other soluble substances are as follows: $-\tau D_i \nabla C_i + (\vec{v} \cdot \vec{x}) C_i = 0$, $C_i|_{x=0} = C_{i,coolant}$, $\left. \dfrac{\partial C_i}{\partial x} \right|_{x=R_c} = 0$, where $C_{i,coolant}$ represents a saturation concentration of the $i$-th soluble substance in the coolant, and $x$ represents a depth of a certain position in the CRUD.

Optionally, the server can explicitly solve for the concentration of the boric acid in the corrosion product according to the kinetic equation and the concentration relation expression representing the relationship between the concentration of the boric acid and the concentrations of other soluble substances in the coolant. Based on the concentration relation expression and the concentration of the boric acid, the server calculates the concentrations of other soluble substances in the corrosion product, and then obtains the concentration distribution of other soluble substances in the coolant.

Step 208: a process of heat and mass transfer within the corrosion product is analyzed based on the temperature distributions, the flow velocity distribution, and the concentration distributions of the soluble substances, a concentration of boron enriched within the corrosion product is obtained, and the total amount of boron deposited is obtained based on the concentration of the enriched boron. The soluble substances include the boric acid and other soluble substances.

The heat and mass transfer refers to heat transfer and mass transfer. The total amount of boron deposited $m_B$ can be calculated by using the total mass of corrosion product and the concentration of boron enriched within the corrosion product, and the calculation formula is as follows: $m_B = C_{adsorp}\rho_c A_d \delta_c$, where $C_{adsorp}$ represents an adsorption capacity of boron per unit mass of corrosion product, in g/g; $\rho_c$ represents the density of the coolant, in kg/m³; and $\delta_c$ represents the average thickness of the CRUD in the deposition region. The calculation formula for $C_{adsorp}$ is as follows: $C_{adsorp} = 9\times10^{-9} \cdot C_{clad} + 2\times10^{-4}$, where $C_{clad}$ represents the concentration of boron enriched within the corrosion product, in ppm. The calculation formula for $C_{clad}$ is as follows:

$$CF = \frac{C_{clad}}{C_{bulk}} = \exp^{\frac{m_e \delta_c}{\rho_s D_B \phi}}$$

, where $CF$ represents a concentration factor which is a dimensionless number; $m_e$ represents a boiling rate, which is obtained by thermal software; $C_{bulk}$ represents the concentration of boric acid in the coolant, in ppm; $D_B$ represents the diffusion coefficient of boron, in cm/s; $\rho_s$ represents the density of the coolant in the saturated state, in g/cm³; and $\phi$ represents the porosity of the corrosion product. As can be seen from the calculation formula for $C_{clad}$ that

$$CF = \frac{C_{clad}}{C_{bulk}} = \exp^{\frac{m_e \delta_c}{\rho_s D_B \phi}}$$

, only when the corrosion product is present and occurs in the subcooled nucleate boiling region, the concentration enrichment may occur. In the concentration enrichment region, the concentration distribution within the corrosion product in the thickness direction is exponential. As the thickness increases, $C_{clad}$ increases, and a concentration difference between the concentration at the bottom portion of the corrosion product and the concentration of the main fluid increases.

Optionally, the server analyzes the process of the heat and mass transfer of the corrosion product based on the obtained temperature distribution, coolant flow velocity distribution, and concentration distributions of soluble substances in the coolant, obtains the concentration of boron enriched within the corrosion product, and obtains the total amount of boron deposited in the process of the heat and mass transfer within the corrosion product according to the concentration of boron enriched within the corrosion product.

In the aforementioned heat and mass transfer analysis method for the corrosion product in the nuclear reactor, the temperature distributions in the corrosion product are analyzed based on the average thermal conductivity of the corrosion product when the coolant is in the saturated state, nucleate boiling state, and dryout state respectively, so that the impact of the state of the coolant on the heat transfer of the corrosion product is obtained, allowing for a comprehensive analysis of the heat transfer within the corrosion product. Furthermore, the flow velocity distribution of the coolant is determined according to the pressure distribution within the corrosion product, the concentrations of other soluble substances in the corrosion product are determined according to the concentration relation expression and the concentration of boric acid in the corrosion product, and the heat and mass transfer is analyzed in combination with the temperature distributions, the flow velocity distribution, and the concentration distributions of the soluble substances, so that it is possible to take into account the coupling relationship among the temperature distributions, the flow velocity distribution, and the concentration distributions of soluble substances, which allows for a comprehensive analysis of the process of heat and mass transfer, thereby obtaining more accurate concentration of boron enriched within the corrosion product, and thus obtaining the total amount of boron deposited.

In an embodiment, obtaining the average thermal conductivity of the corrosion product includes:

obtaining the porosity of the corrosion product, the solid thermal conductivity of the corrosion product, and the liquid thermal conductivity of the coolant in the corrosion product; and
determining the average thermal conductivity of the corrosion product based on the porosity, the solid thermal conductivity, and the liquid thermal conductivity.

The porosity refers to a percentage of a pore volume in a blocky material to the total volume of the material in a natural state. For example, the porosity of CRUD. The thermal conductivity, also referred to as a thermal conductivity coefficient, is capable of reflecting the heat transfer capability of matter, and is defined as the amount of heat transferred through a unit heat-conducting surface per unit time by a unit temperature gradient according to Fourier's law. The calculation formula for the average thermal conductivity $k_m$ is as follows: $k_m = \phi k_s + \phi k_f$, where $\phi$ represents the porosity, $k_s$ is the solid thermal conductivity, and $k_f$ is the liquid thermal conductivity. The solution for $k_s$ can be obtained according to the relationship between the proportion of each substance in the coolant and the temperature, i.e., $k_s = \prod_{i=1}^{n}\left[k_{s,i} v_{f,i}\right]$,

where $k_{s,i}$ represents the thermal conductivity of the $i$-th substance in Table 1, $v_{f,i}$ represents the volume fraction of the $i$-th substance in Table 1, and $n$ is the quantity of the substances. The solution formula for $k_f$ is as follows: $k_f = 0.686 + 7.3*10^{-10} P + 5.87*10^{-6}(Ts - 415)^2$, where P represents the intensity of pressure in Pa, and $Ts$ represents the saturation temperature of coolant in $K$.

Table 1. Heat transfer coefficients and proportions of substances.

| Substances | $k_{s,i}$ (W/m·k) | Proportions |
|---|---|---|
| Ni | $703.56 - 83.297 \times \ln(Ts + 1518.17)$ | 0 |
| NiO | $-5.602 \times 10^{-9} \cdot Ts^3 + 2.435 \times 10^{-5} \cdot Ts^2 - 0.03543 \cdot Ts + 21.658$ | 0.15 |
| $Fe_3O_4$ | $4.23 - Ts \cdot (1.37 \times 10^{-3})$ | 0.1 |
| $NiFe_2O_4$ | 8 | 0.75 |
| $ZrO_2$ | $3.791 \times 10^{-4} \cdot Ts + 1.748$ | 0 |

Optionally, the server obtains the fluid thermal conductivity of the coolant according to the relationship between the proportion of each substance in the coolant and the temperature, obtains the solid thermal conductivity of the corrosion product according to the solution formula for the solid thermal conductivity, and further obtains the porosity of the corrosion product. The server obtains the average thermal conductivity of the corrosion product by solving the formula $k_m = \phi k_s + \phi k_f$ based on the solid thermal conductivity, the fluid thermal conductivity, and the porosity.

In the embodiment, the average thermal conductivity of the corrosion product can be calculated based on the obtained porosity, solid thermal conductivity, and fluid thermal conductivity, and the temperature distribution in the corrosion product can be determined based on the average thermal conductivity.

In an embodiment, determining the temperature distribution within the corrosion product when the coolant is in the saturated state based on the average thermal conductivity includes:

obtaining the thickness of the corrosion product; and
determining a saturation temperature distribution of the corrosion product when the coolant is in the saturated state based on the average thermal conductivity and the thickness, where the temperature distributions include the saturation temperature distribution.

The thickness refers to a thickness of a thermal conductive material under a stable heat transfer condition. For example, if the thickness of the CRUD is equal to 1 meter when the coolant is in the saturated state, the thickness of the corrosion product is equal to 1 meter.

The saturation temperature distribution is determined by the product of the thickness and the average thermal conductivity. In other words, the saturation temperature distribution in the corrosion product when the coolant is in the saturated state is obtained by multiplying the thickness of the corrosion product by the average thermal conductivity.

Optionally, the server obtains the thickness of the corrosion product, and then determines the saturation temperature distribution in the corrosion product when the coolant is in the saturated state according to the product result of the thickness and the average thermal conductivity.

In the embodiment, by analyzing the heat transfer when the coolant is in the saturated state, the temperature distribution in the corrosion product at future moments can be predicted in advance, thereby preventing the fuel in the nuclear reactor from being damaged due to excessively high local temperatures.

In an embodiment, determining the temperature distribution in the corrosion product when the coolant is in the nucleate boiling state based on the average thermal conductivity includes:

> obtaining a wick boiling relation expression representing a relationship between the thickness of the corrosion product and the temperature within the corrosion product when the coolant is in the nucleate boiling state; and
> determining a temperature distribution within the corrosion product under the nucleate boiling state based on the thickness distribution of the corrosion product and the wick boiling relation expression, where temperature distributions include the temperature distribution under the nucleate boiling state.

The specific form of the wick boiling relation expression is as follows:

$$T_x = Ts + \frac{q_b}{m_f \cdot k_m} \cdot \frac{\sinh(mx)}{\cosh(m\delta_c)} .$$

The wick boiling relation expression can be obtained by combining the heat transfer process formula $\int_{shell} q_c dA +_{chimney} q_b dA$ between the temperature $Tx$ within the CRUD and the thickness $x$ of the CRUD:

$$\frac{d^2 T_x}{dx^2} - \frac{2\pi r_c N h_c}{fk_m}(T_x - Ts) = 0$$ , and the boundary conditions: $T_{x=0} = T_0$, $-k_m \left( \frac{dT_x}{dx} \right)_{x=\delta_c} = \frac{q_b}{f}$ , where

$Ts$ and $T_0$ represent the saturation temperature of the coolant and the temperature of the main fluid, respectively, in K; $x$ represents a depth of a certain position in the CRUD, in $\mu$m; $Tx$ represents the temperature at the position with the depth $x$ in the CRUD; $N$ represents the pore density, in pores/cm$^2$; $r_c$ represents the average pore radius, in cm; $f$ represents an effective heat transfer area coefficient of the CRUD, satisfying $f = 1 - \pi N r_c^2$ ; $k_m$ represents the average thermal conductivity of the CRUD, in W/(m·K); $q_b$ represents a boiling heat flux density, in W/m$^2$; $q_c$ refers to the heat flux density in the CRUD, $A$ represents an evaporation coefficient; $\delta_c$ represents the average thickness of the CRUD in the deposition region, in cm; $chimney$ refers to a chimney channel in the corrosion product; $shell$ refers to the integral along the entire cladding surface; $h_c$ represents an evaporation heat transfer coefficient; and $m^2 = \frac{2\pi r_c N h_c}{fk_m}$ .

Optionally, by combining the heat transfer process formula, the relation expression between the temperature $Tx$ within the CRUD and the thickness $x$ of the CRUD, and the boundary conditions, the server can obtain the wick boiling relation expression representing the relationship between the thickness of the corrosion product and the temperature within the corrosion product when the coolant is in the nucleate boiling state. Based on the thickness at each position in the corrosion product and the obtained wick boiling relation expression, the server obtains the nucleate boiling temperature distribution representing the temperatures at various positions in the corrosion product.

In the embodiment, by obtaining the wick boiling relation expression representing the relationship between the thickness of the corrosion product and the temperature within the corrosion product when the coolant is in the nucleate boiling state, the temperature distribution within the corrosion product can be solved for based on the wick boiling relation expression and the thickness distribution of the corrosion product, thereby obtaining the temperature distribution within the corrosion product when the coolant is in the nucleate boiling state.

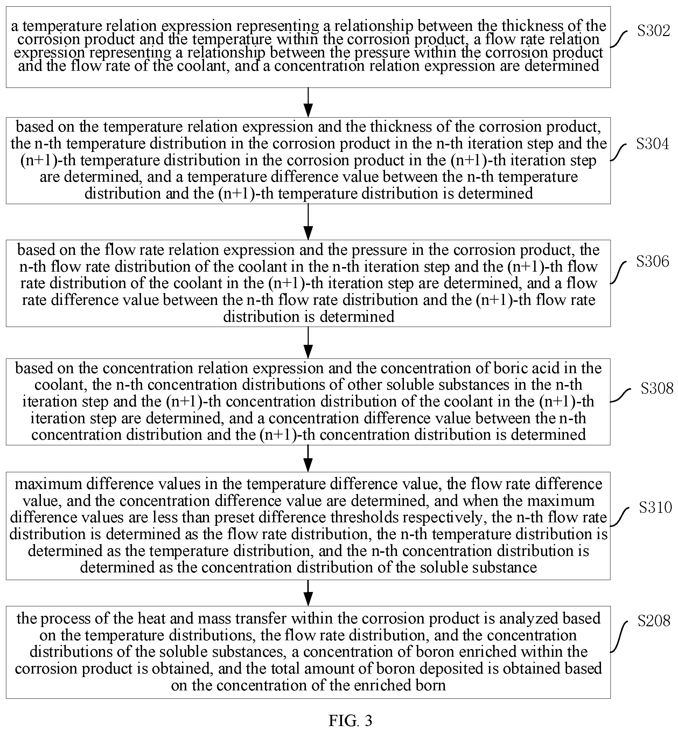

In an embodiment, as shown in FIG. 3, the heat and mass transfer analysis method for the corrosion product in the nuclear reactor may include the following steps.

Step 302: a temperature relation expression representing a relationship between the thickness of the corrosion product and the temperature within the corrosion product, a flow velocity relation expression representing a relationship between the pressure within the corrosion product and the flow velocity of the coolant, and a concentration relation expression are determined.

The temperature relation expression involves three states of the coolant, i.e., the saturated state, the nucleate boiling state, and the dryout state. The flow velocity relation expression is expressed as $\vec{v} = -\dfrac{\kappa}{\mu_w}\nabla p$ , which is derived from Darcy's law and represents the relationship between the flow velocity $\vec{v}$ and pressure $\nabla p$ of the coolant in the corrosion product. The concentration relation expression refers to the concentration calculation formula for the soluble substances, expressed as: $[(\vec{v} \cdot \vec{x}) - \Delta\tau D_i]\nabla C_i + \sum[C_{i,source} - C_{i,sink}] = 0$.

Optionally, the server determines the temperature relation expression when the coolant is in the three states, i.e., the saturated state, the nucleate boiling state, and the dryout state, determines the relation expression representing the relationship between the flow velocity and the pressure of the coolant in the corrosion product according to the Darcy's law, and determines the concentration relation expression representing the relationship between the concentration of boric acid and the concentrations of other soluble substances in the coolant.

Step 304: based on the temperature relation expression and the thickness of the corrosion product, the $n$-th temperature distribution in the corrosion product in the $n$-th iteration step and the $(n+1)$-th temperature distribution in the corrosion product in the $(n+1)$-th iteration step are determined, and a temperature difference value between the $n$-th temperature distribution and the $(n+1)$-th temperature distribution is determined. The $n$-th iteration step and the $(n+1)$-th iteration step are adjacent iteration steps, and $n$ is a positive integer.

The iteration refers to an activity of a repeated feedback process. The $n$-th iteration step can be understood as the activity of repeated feedback process at moment $A$, and the $(n+1)$-th iteration step can be understood as the activity of repeated feedback process at moment $B$. Moment $A$ and moment $B$ are adjacent moments, that is, there is no other iteration steps between the $n$-th iteration step and the $(n+1)$-th iteration step. When the temperature distribution is calculated, the temperature obtained in the previous iteration step is used for the calculation in the next iteration step.

If the temperature difference value between the $n$-th temperature distribution obtained in the n-th iteration step and the $(n+1)$-th temperature distribution obtained in the $(n+1)$-th iteration step is less than a preset difference threshold, it indicates that the temperature relation expression is converged. The converged relation expression can then be used to calculate the $(n+2)$-th temperature distribution in the $(n+2)$-th iteration step again. Alternatively, the $n$-th temperature distribution or the $(n+1)$-th temperature distribution can be directly output as the final temperature distribution for analyzing the process of heat and mass transfer of corrosion product.

Optionally, the server calculates the $n$-th temperature distribution of corrosion product in the $n$-th iteration step and the $(n+1)$-th temperature distribution of corrosion product in the $(n+1)$-th iteration step according to the relation expression for calculating the temperature distribution when the coolant is in the saturated state, calculates the $n$-th temperature distribution of the corrosion product in the $n$-th iteration step and the $(n+1)$-th temperature distribution of corrosion product in the $(n+1)$-th iteration step according to the relation expression for calculating the temperature distribution when the coolant is in the nucleate boiling state, calculates the $n$-th temperature distribution of corrosion product in the $n$-th iteration step and the $(n+1)$-th temperature distribution of corrosion product in the $(n+1)$-th iteration step according to the relation expression for calculating the temperature distribution when the coolant is in the dryout state. Subsequently, the server calculates the temperature difference value between the $n$-th temperature distribution and the $(n+1)$-th temperature distribution obtained in the saturated state, calculates the temperature difference value between the $n$-th temperature distribution and the $(n+1)$-th temperature distribution obtained in the nucleate boiling state, and calculates the temperature difference value between the $n$-th temperature distribution and $(n+1)$-th temperature distribution obtained in the dryout state.

Step 306: based on the flow velocity relation expression and the pressure in the corrosion product, the $n$-th flow velocity distribution of the coolant in the $n$-th iteration step and the $(n+1)$-th flow velocity distribution of the coolant in the $(n+1)$-th iteration step are determined, and a flow velocity difference value between the $n$-th flow velocity distribution and the $(n+1)$-th flow velocity distribution is determined.

The $n$-th flow velocity distribution and the $(n+1)$-th flow velocity distribution are obtained according to the flow velocity relation expression $\vec{v} = -\dfrac{\kappa}{\mu_w}\nabla p$ and the specific values of the pressure distribution. In other words, the flow velocity distribution of the coolant can be obtained when the parameters on the right side of the flow velocity relation expression are known. The specific value of the flow velocity distribution used in each iteration step may be the same or different. When calculating the flow velocity distribution, the flow velocity obtained in the previous iteration step is used for the calculation in the next iteration step.

Optionally, the server respectively calculates the $n$-th flow velocity distribution of the coolant in the $n$-th iteration step and the $(n+1)$-th flow velocity distribution of the coolant in the $(n+1)$-th iteration step according to the flow velocity relation expression representing the relationship between the flow velocity and the pressure, and the pressure distributions in both the $n$-th iteration step and the $(n+1)$-th iteration step. The server calculates the flow velocity difference value of the coolant according to the obtained $n$-th and $(n+1)$-th flow velocity distributions.

Step 308: based on the concentration relation expression and the concentration of boric acid in the coolant, the $n$-th concentration distributions of other soluble substances in the $n$-th iteration step and the $(n+1)$-th concentration distribution of the coolant in the $(n+1)$-th iteration step are determined, and a concentration difference value between the $n$-th concentration distribution and the $(n+1)$-th concentration distribution is determined.

The concentration relation expression refers to

$$\left[\left(\vec{v}\cdot\vec{x}\right)-\Delta\tau D_i\right]\triangledown C_i + \sum\left[C_{i,source}-C_{i,\sin k}\right]=0.$$

Optionally, the server calculates the $n$-th concentration distribution of the coolant in the $n$-th iteration step and the $(n+1)$-th concentration distribution of the coolant in the $(n+1)$-th iteration step according to the concentration relation expression representing the relationship between the concentration of the boric acid and the concentrations of other soluble chemical substances, and the concentration distributions of the boric acid in both the $n$-th iteration step and the $(n+1)$-th iteration step. The server calculates concentration difference values for other soluble chemical substances in the coolant according to the obtained $n$-th concentration distribution and the $(n+1)$-th concentration distribution.

Step 310: maximum difference values in the temperature difference value, the flow velocity difference value, and the concentration difference value are determined, and when the maximum difference values are less than preset difference thresholds respectively, the $n$-th flow velocity distribution is determined as the flow velocity distribution, the $n$-th temperature distribution is determined as the temperature distribution, and the $n$-th concentration distribution is determined as the concentration distribution of the soluble substance.

Optionally, the maximum difference values refer to the maximum values in the temperature difference value, the flow velocity difference value, and the concentration difference value respectively. The maximum difference values are respectively less than the preset difference thresholds, which indicates that all corresponding relation expressions are converged. When the maximum difference values are less than the preset difference thresholds respectively, the $(n+1)$-th flow velocity distribution can be determined as the flow velocity distribution for the heat and mass transfer analysis, the $(n+1)$-th temperature distribution can be determined as the temperature distribution for the heat and mass transfer analysis, and the $(n+1)$-th concentration distribution can be determined as the concentration distribution of other soluble substances for the heat and mass transfer analysis. Furthermore, the (n+2)-th temperature distribution, the (n+2)-th flow velocity distribution, and the (n+2)-th concentration distribution in the (n+2)-th iteration step can be calculated according to the converged relation expressions.

In an embodiment, a temperature difference threshold can be set for the temperature distribution, a flow velocity difference threshold can be set for the flow velocity distribution, and a concentration difference threshold can be set for the concentration distribution, respectively. It is further set that no further iteration is needed only when the temperature difference value is less than the temperature difference threshold, the flow velocity difference value is less than the flow velocity difference threshold, and the concentration difference value is less than the concentration difference threshold. In other words, only when all the corresponding relation expressions are converged, the final determined relation expressions are used to determine the temperature distribution, the flow velocity distribution, and the concentration distribution for the heat and mass transfer analysis of the corrosion product.

In the embodiment, the difference thresholds are set, and the corresponding relation expressions are determined to converge only when the maximum difference values are less than the preset difference thresholds respectively, so that the temperature distribution, the concentration distribution, and the flow velocity distribution obtained based on the respective corresponding relation expressions can be more accurate, thereby allowing the heat and mass transfer analysis results obtained based on the temperature distribution, the concentration distribution, and the flow velocity distribution to be more accurate.

In an embodiment, determining the temperature distribution of corrosion product according to the average thermal conductivity when the coolant is in the dryout state includes:

> obtaining a three-dimensional coordinate system relation expression representing the relationship between the thickness of the corrosion product and the temperature within the corrosion product when the coolant is in the dryout state;
> determining a dryout temperature distribution of the corrosion product based on the thickness of the corrosion product and the three-dimensional coordinate system relation expression, where temperature distributions include the dryout temperature distribution.

The three-dimensional coordinate system is used for positioning from three dimensions, which can be established by the three-dimensional Computational Fluid Dynamics (CFD) software. The three-dimensional coordinate system may be, for example, a cylindrical coordinate system, a geodetic coordinate system, a spherical coordinate system, etc. The specific form of the cylindrical coordinate system is:

$$\rho_f C_{p,f} \frac{\partial T}{\partial r} = \frac{1}{r}\frac{\partial}{\partial r}\left(k_w r \frac{\partial T}{\partial r}\right) + \frac{1}{r^2}\frac{\partial}{\partial \varphi}\left(k_w \frac{\partial T}{\partial r}\right) + \frac{\partial}{\partial \delta}\left(k_w \frac{\partial T}{\partial \delta}\right) + \Phi$$

. Under steady-state, constant-property, and no-internal-heat-source conditions, the cylindrical coordinate system relation expression can be rewritten as:
$$\frac{1}{r}\frac{\partial T}{\partial r} + \frac{\partial^2 T}{\partial r^2} + \frac{1}{r^2}\frac{\partial^2 T}{\partial \varphi^2} + \frac{\partial^2 T}{\partial \delta^2} = 0$$
, with the boundary conditions *as*:

$$-k_w f \frac{dT}{dx}\bigg|_{x=\delta_c} = q_b, \quad -k_w f \frac{dT}{dx}\bigg|_{x=\delta_c + L_b} = q_w, \quad -k_w \frac{dT}{dr}\bigg|_{r=R_c} = 0, \quad -k_w \frac{dT}{dr}\bigg|_{r=r_c} = h_c(T - Ts),$$

where $R_c$ represents a distance from a center of the chimney to a unit boundary in the corrosion product, in $\mu$m; $C_{p,f}$ represents the specific heat of the coolant at the corresponding pressure; $\rho_f$ represents the density of the coolant; $h_c$ represents the evaporative heat transfer coefficient; $T$ and $Ts$ both represent temperature; $q_w$ represents the heat flux density at the contact surface between the fuel cladding and the corrosion product, in $W/m^2$; $k_w$ represents a thickness of a thermal boundary layer, in $W/(m \cdot K)$; $L_b$ represents a thickness of a bubble growth, in $\mu$m; $\varphi$ represents an angle; $\Phi$ is an unknown parameter; $r$ represents the pore radius.

Optionally, the server obtains the cylindrical coordinate system relation expression

$$\rho_f C_{p,f} \frac{\partial T}{\partial r} = \frac{1}{r}\frac{\partial}{\partial r}\left(k_w r \frac{\partial T}{\partial r}\right) + \frac{1}{r^2}\frac{\partial}{\partial \varphi}\left(k_w \frac{\partial T}{\partial r}\right) + \frac{\partial}{\partial \delta}\left(k_w \frac{\partial T}{\partial \delta}\right) + \Phi$$
representing the relationship

between the thickness of the corrosion product and the temperature within the corrosion product when the coolant is in the dryout state, and rewrites the above relation expression under the steady-state, constant-property, and no-internal-heat-source conditions as:
$$\frac{1}{r}\frac{\partial T}{\partial r} + \frac{\partial^2 T}{\partial r^2} + \frac{1}{r^2}\frac{\partial^2 T}{\partial \varphi^2} + \frac{\partial^2 T}{\partial \delta^2} = 0$$
. The server then solves for the dryout temperature distribution of the corrosion product in the three dimensions according to the rewritten expression

$$\frac{1}{r}\frac{\partial T}{\partial r} + \frac{\partial^2 T}{\partial r^2} + \frac{1}{r^2}\frac{\partial^2 T}{\partial \varphi^2} + \frac{\partial^2 T}{\partial \delta^2} = 0$$
, and solves for the dryout temperature distribution while satisfying the boundary conditions.

In the embodiment, the three-dimensional coordinate system relation expression representing the relationship between the thickness of the corrosion product and the temperature within the corrosion product when the coolant is in the dryout state is determined, and the temperature distribution within the corrosion product can be observed more intuitively, thereby making the heat and mass transfer analysis result obtained based on the temperature distribution more accurate.

The present application further provides an application scenario in which the above-mentioned heat and mass transfer analysis method for the corrosion product in the nuclear reactor is applied. Specifically, the heat and mass transfer analysis method for the corrosion product in the nuclear reactor is applied in the application scenario as follows: the server obtains the fluid thermal conductivity of the coolant according to the relationship between the proportion of each substance in the coolant and the temperature, obtains the solid thermal conductivity in the corrosion product according to the solution formula for the solid thermal conductivity, and also obtains the porosity of the corrosion product; the server solves formulas based on the solid thermal conductivity, the fluid thermal conductivity, and the porosity to calculate the average thermal conductivity of the corrosion product, and then determines the temperature distribution of the corrosion product when the coolant is in the saturated state according to the product result of the average thermal conductivity and the thickness of the corrosion product.

The server calculates the $n$-th temperature distribution of the corrosion product in the $n$-th iteration step and the ($n$+1)-th temperature distribution of corrosion product in the ($n$+1)-th iteration step according to the relation expression for calculating the temperature distribution when the coolant is in the nucleate boiling state, calculates the n-th temperature distribution of corrosion product in the $n$-th iteration step and the ($n$+1)-th temperature distribution of corrosion product in the ($n$+1)-th iteration step according to the relation expression for calculating the temperature distribution when the coolant is in the dryout state, then calculates the temperature difference value between the $n$-th temperature distribution and the ($n$+1)-th temperature distribution obtained in the saturated state, calculates the temperature difference value between the $n$-th temperature distribution and the ($n$+1)-th temperature distribution obtained in the nucleate boiling state, and calculates the temperature difference value between the $n$-th temperature distribution and ($n$+1)-th temperature distribution obtained in the dryout state. When all the temperature difference values are less than the temperature difference threshold, the server determines that the relation expression for calculating the temperature distribution is converged, and determines the ($n$+1)-th temperature distribution as the temperature distribution for analyzing the heat and mass transfer.

The server calculates the $n$-th flow velocity distribution of the coolant in the $n$-th iteration step and the ($n$+1)-th flow velocity distribution of the coolant in the ($n$+1)-th iteration step according to the flow velocity relation expression representing the relationship between the flow velocity and the pressure, and the pressure distributions in both the $n$-th iteration step and the ($n$+1)-th iteration step. The server calculates the flow velocity difference value of the coolant according to the obtained $n$-th and ($n$+1)-th flow velocity distributions. When all flow velocity differences are less than the flow velocity difference threshold, the server determines that the relation expression for calculating the flow velocity distribution is converged, and determines the ($n$+1)-th flow velocity distribution as the flow velocity distribution for analyzing the heat and mass transfer.

The server calculates the $n$-th concentration distribution of the coolant in the $n$-th iteration step and the ($n$+1)-th concentration distribution of the coolant in the ($n$+1)-th iteration step according to the concentration relation expression representing the relationship between the concentration of the boric acid and the concentrations of other soluble substances, and the concentration distributions of the boric acid in both the $n$-th iteration step and the ($n$+1)-th iteration step. The server calculates the concentration difference values for other soluble substances in the coolant according to the obtained $n$-th concentration distribution and the ($n$+1)-th concentration distribution. When all the concentration difference values are less than the concentration difference threshold, the server determines that the relation expression for calculating the concentration distribution is converged, and determines the ($n$+1)-th concentration distribution as the concentration distribution for analyzing the heat and mass transfer. The server calculates the total amount of boron deposited according to the total mass of the corrosion product, and thus obtains the total amount of boron deposited in the corrosion product.

Finally, the server analyzes the process of heat and mass transfer in the corrosion product based on the obtained temperature distribution in the corrosion product, flow velocity distribution of the coolant, concentration distribution of soluble substances in the coolant, and total amount of boron deposited in the corrosion product, and then obtains the analysis result of the heat and mass transfer in the corrosion product.

It should be appreciated that although the steps in the flow charts involved in the embodiments described above are shown sequentially according to the arrows, these steps are not necessarily executed in the order indicated by the arrows. Unless otherwise specified in this document, there is no strict order in which these steps are performed, and these steps may be performed in other orders. Moreover, at least some steps in the flow charts involved in the embodiments described above may include multiple steps or multiple stages. These steps or stages are not definitely executed at the same time, but may be executed at different moments. These steps or stages are not definitely executed sequentially, but may be executed in turn or alternately with other steps or at least some of the steps or stages in other steps.

Based on the same inventive concept, in embodiments of the present application, a heat and mass transfer analysis apparatus for a corrosion product in a nuclear reactor is provided, which is used to implement the above-mentioned heat and mass transfer analysis method for the corrosion product in the nuclear reactor. The solution provided by the apparatus is similar to that described in the above method. Therefore, as for the specific limitations in one or more embodiments of the heat and mass transfer analysis apparatus for the corrosion product in the nuclear reactor provided below, reference can be made to the limitations of the heat and mass transfer analysis method for the corrosion product in the nuclear reactor, which will not be repeated here.

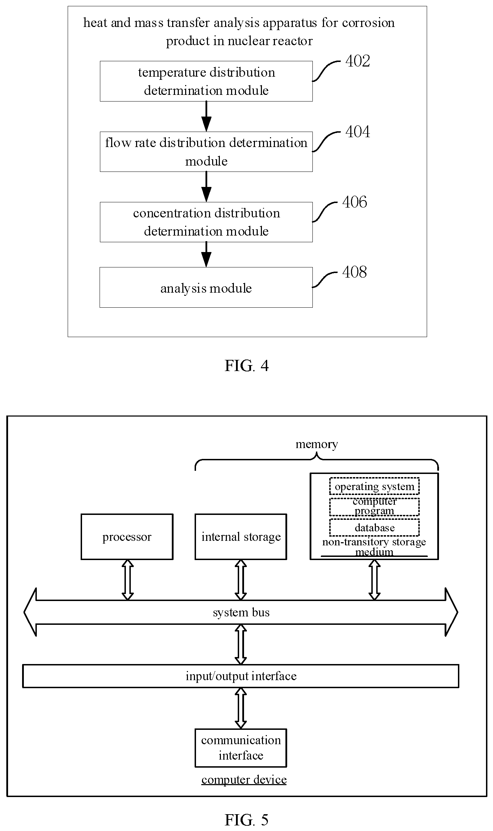

In an embodiment, as shown in FIG. 4, a heat and mass transfer analysis apparatus for a corrosion product in a nuclear reactor is provided, including:

a temperature distribution determination module 402, configured to obtain an average thermal conductivity of the corrosion product in the nuclear reactor, and determine temperature distributions in the corrosion product when a coolant in the corrosion product is in a saturated state, a nucleate boiling state, and a dryout state respectively based on the average thermal conductivity;

a flow velocity distribution determination module 404, configured to determine a flow velocity distribution of the coolant in the corrosion product based on a pressure distribution in the corrosion product;

a concentration distribution determination module 406, configured to obtain a concentration relation expression representing a relationship between a concentration of boric acid and concentrations of other soluble substances in the coolant, and determine concentration distributions of other soluble substances based on the concentration relation expression and the concentration of boric acid; and

an analysis module 408, configured to analyze a process of heat and mass transfer within the corrosion product based on the temperature distributions, the flow velocity distribution, and the concentration distributions of the soluble substances, obtain a concentration of boron enriched within the corrosion product, and obtain the total amount of boron deposited based on the concentration of the enriched boron. The soluble substances include the boric acid and other soluble substances.

In an embodiment, the temperature distribution determination module further includes:

a first data determination unit, configured to obtain a porosity of the corrosion product, a solid thermal conductivity of the corrosion product, and a liquid thermal conductivity of the coolant in the corrosion product; and
a second data determination unit, configured to determine the average thermal conductivity of the corrosion product based on the porosity, the solid thermal conductivity, and the liquid thermal conductivity.

In an embodiment, the temperature distribution determination module further includes:

a length obtaining unit, configured to obtain a thickness of the corrosion product; and
a saturation temperature distribution determination unit, configured to determine a saturation temperature distribution of the corrosion product when the coolant is in the saturated state based on the average thermal conductivity and the thickness, where the temperature distributions include the saturation temperature distribution.

In an embodiment, the temperature distribution determination module further includes:

a first relation expression determination unit, configured to obtain a wick boiling relation expression representing a relationship between the thickness of the corrosion product and the temperature within the corrosion product when the coolant is in the nucleate boiling state; and
a nucleate boiling temperature distribution determination unit, configured to determine a temperature distribution within the corrosion product under the nucleate boiling state based on a thickness distribution of the corrosion product and the wick boiling relation expression, where the temperature distributions include the temperature distribution under the nucleate boiling state.

In an embodiment, the heat and mass transfer analysis apparatus for the corrosion product in the nuclear reactor further includes:

a second relation expression determination unit, configured to determine a temperature relation expression representing a relationship between the thickness of the corrosion product and the temperature within the corrosion product, a flow velocity relation expression representing a relationship between the pressure within the corrosion product and the flow velocity of the coolant, and a concentration relation expression;
a temperature difference value determination unit, configured to determine, based on the temperature relation expression and the thickness of the corrosion product, the $n$-th temperature distribution in the corrosion product in the $n$-th iteration step and the $(n+1)$-th temperature distribution in the corrosion product in the $(n+1)$-th iteration step, and determine a temperature difference value between the $n$-th temperature distribution and the $(n+1)$-th temperature distribution, where the $n$-th iteration step and the $(n+1)$-th iteration step are adjacent iteration steps;
a flow velocity difference value determination unit, configured to determine, based on the flow velocity relation expression and the pressure in the corrosion product, the $n$-th flow velocity distribution of the coolant in the $n$-th iteration step and the $(n+1)$-th flow velocity distribution of the coolant in the $(n+1)$-th iteration step, and determine a flow velocity difference value between the $n$-th flow velocity distribution and the $(n+1)$-th flow velocity distribution;
a concentration difference value determination unit, configured to determine, based on the concentration relation expression and the concentration of boric acid in the coolant, the $n$-th concentration distributions of other soluble substances in the $n$-th iteration step and the $(n+1)$-th concentration distribution of the coolant in the $(n+1)$-th iteration step, and determine a concentration difference value between the $n$-th concentration distribution and the $(n+1)$-th concentration distribution; and
a $(n+2)$-th data determination unit, configured to determine maximum difference values in the temperature difference value, the flow velocity difference value, and the concentration difference value, and when the maximum difference values are less than preset difference thresholds respectively, determine the $n$-th flow velocity distribution as the flow velocity distribution, the $n$-th temperature distribution as the temperature distribution, and the $n$-th concentration distribution as

the concentration distribution of the soluble substance.

In an embodiment, the temperature distribution determination module further includes:

a third relation expression determination unit, configured to obtain a three-dimensional coordinate system relation expression representing the relationship between the thickness of the corrosion product and the temperature within the corrosion product when the coolant is in the dryout state; and
a dryout temperature distribution determination unit, configured to determine a dryout temperature distribution of the corrosion product based on the thickness of the corrosion product and the three-dimensional coordinate system relation expression, where the temperature distributions include the dryout temperature distribution.

The modules in the aforementioned heat and mass transfer analysis apparatus for the corrosion product in the nuclear reactor can be implemented entirely or partially through software, hardware, or a combination thereof. The above modules can be embedded in a processor of a computer device in hardware form or independent of it, or may be stored in a memory of the computer device in software form, so that the processor can invoke and execute the corresponding operations of the above modules.

In an embodiment, a computer device is provided, which may be a server, and the internal structure diagram thereof may be as shown in FIG. 5. The computer device includes a processor, a memory, an input/output interface (I/O), and a communication interface. The processor, the memory, and the input/output interface are connected via a system bus, and the communication interface is connected to the system bus via the input/output interface. The processor in the computer device provides computing and control capabilities. The memory in the computer device includes a non-transitory storage medium and an internal storage. The non-transitory storage medium stores an operating system, a computer program, and a database. This internal storage provides an environment for operations of the operating system and the computer program in the non-transitory storage medium. The database in the computer device is configured to store data on the average thermal conductivity, temperature distribution, pressure distribution, flow velocity distribution, concentration of boric acid, concentration distributions of other soluble substances, and total amount of boron deposited. The input/output interface of the computer device is configured to exchange information between the processor and an external device. The communication interface in the computer device is configured to communicate with the external terminal via a network connection. The computer program, when executed by a processor, causes the processor to implement a heat and mass transfer analysis method for a corrosion product in a nuclear reactor.

Those skilled in the art may understand that the structure shown in FIG. 5 is merely a block diagram of a portion of the structure related to the present application and does not constitute a limitation on the computer device to which the present application is applied. Specific computer devices may include more or fewer components than those shown in the figure, or may combine certain components, or may have different component arrangements.

In an embodiment, a computer device is provided, including a processor and a memory storing a computer program. The processor, when executing the computer program, implements the following steps:
an average thermal conductivity of the corrosion product in the nuclear reactor is obtained, and temperature distributions in the corrosion product when a coolant in the corrosion product is in a saturated state, a nucleate boiling state, and a dryout state respectively are determined based on the average thermal conductivity; a flow velocity distribution of the coolant in the corrosion product is determined based on a pressure distribution in the corrosion product; a concentration relation expression representing a relationship between a concentration of boric acid and concentrations of other soluble substances in the coolant is obtained, and concentration distributions of other soluble substances are determined based on the concentration relation expression and the concentration of boric acid; the process of heat and mass transfer within the corrosion product is analyzed based on the temperature distributions, the flow velocity distribution, and the concentration distributions of the soluble substances, a concentration of boron enriched within the corrosion product is obtained, and the total amount of boron deposited is obtained based on the concentration of the enriched boron; the soluble substances include the boric acid and other soluble substances.

In an embodiment, the processor, when executing the computer program, further implements the following steps: a porosity of the corrosion product, a solid thermal conductivity of the corrosion product, and a liquid thermal conductivity of the coolant in the corrosion product are obtained; and an average thermal conductivity of the corrosion product is determined based on the porosity, the solid thermal conductivity, and the liquid thermal conductivity.

In an embodiment, the processor, when executing the computer program, further implements the following steps: a thickness of the corrosion product is obtained; and a saturation temperature distribution of the corrosion product when the coolant is in the saturated state is determined based on the average thermal conductivity and the thickness, where the temperature distributions include the saturation temperature distribution.

In an embodiment, the processor, when executing the computer program, further implements the following steps: a wick boiling relation expression representing a relationship between the thickness of the corrosion product and the temperature within the corrosion product when the coolant is in the nucleate boiling state is obtained; and a temperature distribution within the corrosion product under the nucleate boiling state is determined based on a thickness distribution of the corrosion product and the wick boiling relation expression, where the temperature distributions include the temperature distribution under the nucleate boiling state.

In an embodiment, the processor, when executing the computer program, further implements the following steps: a temperature relation expression representing a relationship between the thickness of the corrosion product and the temperature within the corrosion product, a flow velocity relation expression representing a relationship between the pressure within the corrosion product and the flow velocity of the coolant, and a concentration relation expression are determined; based on the temperature relation expression and the thickness of the corrosion product, the $n$-th temperature distribution in the corrosion product in the $n$-th iteration step and the $(n+1)$-th temperature distribution in the corrosion product in the $(n+1)$-th iteration step are determined, and a temperature difference value between the n-th temperature distribution and the $(n+1)$-th temperature distribution is determined, the $n$-th iteration step and the $(n+1)$-th iteration step are adjacent iteration steps; based on the flow velocity relation expression and the pressure in the corrosion product, the $n$-th flow velocity distribution of the coolant in the $n$-th iteration step and the $(n+1)$-th flow velocity distribution of the coolant in the $(n+1)$-th iteration step are determined, and a flow velocity difference value between the $n$-th flow velocity distribution and the $(n+1)$-th flow velocity distribution is determined; based on the concentration relation expression and the concentration of boric acid in the coolant, the $n$-th concentration distributions of other soluble substances in the $n$-th iteration step and the $(n+1)$-th concentration distribution of the coolant in the $(n+1)$-th iteration step are determined, and a concentration difference value between the $n$-th concentration distribution and the $(n+1)$-th concentration distribution is determined; maximum difference values in the temperature difference value, the flow velocity difference value, and the concentration difference value are determined, and when the maximum difference values are less than preset difference thresholds respectively, the $n$-th flow velocity distribution is determined as the flow velocity distribution, the $n$-th temperature distribution is determined as the temperature distribution, and the $n$-th concentration distribution is determined as the concentration distribution of other soluble substances.

In an embodiment, the processor, when executing the computer program, further implements the following steps: a three-dimensional coordinate system relation expression representing the relationship between the thickness of the corrosion product and the temperature within the corrosion product when the coolant is in the dryout state is obtained; a dryout temperature distribution of the corrosion product is determined based on the thickness of the corrosion product and the three-dimensional coordinate system relation expression, where the temperature distributions include the dryout temperature distribution.

In an embodiment, a computer-readable storage medium is provided, on which a computer program is stored. The computer program, when executed by a processor, causes the processor to implement the following steps: an average thermal conductivity of the corrosion product in the nuclear reactor is obtained, and temperature distributions in the corrosion product when a coolant in the corrosion product is in a saturated state, a nucleate boiling state, and a dryout state respectively are determined based on the average thermal conductivity; a flow velocity distribution of the coolant in the corrosion product is determined based on a pressure distribution in the corrosion product; a concentration relation expression representing a relationship between a concentration of boric acid and concentrations of other soluble substances in the coolant is obtained, and concentration distributions of other soluble substances are determined based on the concentration relation expression and the concentration of boric acid; the process of heat and mass transfer within the corrosion product is analyzed based on the temperature distributions, the flow velocity distribution, and the concentration distributions of the soluble substances, a concentration of boron enriched within the corrosion product is obtained, and the total amount of boron deposited is obtained based on the concentration of the enriched boron; the soluble substances include the boric acid and other soluble substances.

In an embodiment, the processor, when executing the computer program, further implements the following steps: a porosity of the corrosion product, a solid thermal conductivity of the corrosion product, and a liquid thermal conductivity of the coolant in the corrosion product are obtained; and an average thermal conductivity of the corrosion product is determined based on the porosity, the solid thermal conductivity, and the liquid thermal conductivity.

In an embodiment, the processor, when executing the computer program, further implements the following steps: a thickness of the corrosion product is obtained; a saturation temperature distribution of the corrosion product when the coolant is in the saturated state is determined based on the average thermal conductivity and the thickness, where the temperature distributions include the saturation temperature distribution.

In an embodiment, the processor, when executing the computer program, further implements the following steps: a wick boiling relation expression representing a relationship between the thickness of the corrosion product and the temperature within the corrosion product when the coolant is in the nucleate boiling state is obtained; a temperature distribution within the corrosion product under the nucleate boiling state is determined based on a thickness distribution of the corrosion product and the wick boiling relation expression, where the temperature distributions include the temperature distribution under the nucleate boiling state.

In an embodiment, the processor, when executing the computer program, further implements the following steps: a temperature relation expression representing a relationship between the thickness of the corrosion product and the temperature within the corrosion product, a flow velocity relation expression representing a relationship between the pressure within the corrosion product and the flow velocity of the coolant, and a concentration relation expression are determined; based on the temperature relation expression and the thickness of the corrosion product, the $n$-th temperature distribution in the corrosion product in the $n$-th iteration step and the $(n+1)$-th temperature distribution in the corrosion product in the $(n+1)$-th iteration step are determined, and a temperature difference value between the n-th temperature distribution and the $(n+1)$-th temperature distribution is determined, the $n$-th iteration step and the $(n+1)$-th iteration step are adjacent iteration steps; based on the flow velocity relation expression and the pressure in the corrosion product, the $n$-th flow velocity distribution of the coolant in the $n$-th iteration step and the $(n+1)$-th flow velocity distribution of the coolant in the ($n$+1)-th iteration step are determined, and a flow velocity difference value between the $n$-th flow velocity distribution and the ($n$+1)-th flow velocity distribution is determined; based on the concentration relation expression and the concentration of boric acid in the coolant, the $n$-th concentration distributions of other soluble substances in the $n$-th iteration step and the ($n$+1)-th concentration distribution of the coolant in the ($n$+1)-th iteration step are determined, and a concentration difference value between the $n$-th concentration distribution and the ($n$+1)-th concentration distribution is determined; maximum difference values in the temperature difference value, the flow velocity difference value, and the concentration difference value are determined, and when the maximum difference values are less than preset difference thresholds respectively, the $n$-th flow velocity distribution is determined as the flow velocity distribution, the $n$-th temperature distribution is determined as the temperature distribution, and the $n$-th concentration distribution is determined as the concentration distribution of other soluble substances.

In an embodiment, the processor, when executing the computer program, further implements the following steps: a three-dimensional coordinate system relation expression representing the relationship between the thickness of the corrosion product and the temperature within the corrosion product when the coolant is in the dryout state is obtained; a dryout temperature distribution of the corrosion product is determined based on the thickness of the corrosion product and the three-dimensional coordinate system relation expression, the temperature distributions include the dryout temperature distribution.

In an embodiment, a computer program product is provided, including a computer program. The computer program, when executed by a processor, may cause the processor to implement the following steps:
an average thermal conductivity of the corrosion product in the nuclear reactor is obtained, and temperature distributions in the corrosion product when a coolant in the corrosion product is in a saturated state, a nucleate boiling state, and a dryout state respectively are determined based on the average thermal conductivity; a flow velocity distribution of the coolant in the corrosion product is determined based on a pressure distribution in the corrosion product; a concentration relation expression representing a relationship between a concentration of boric acid and concentrations of other soluble substances in the coolant is obtained, and concentration distributions of other soluble substances are determined based on the concentration relation expression and the concentration of boric acid; the process of heat and mass transfer within the corrosion product is analyzed based on the temperature distributions, the flow velocity distribution, and the concentration distributions of the soluble substances, a concentration of boron enriched within the corrosion product is obtained, and the total amount of boron deposited is obtained based on the concentration of the enriched boron; the soluble substances include the boric acid and other soluble substances.

In an embodiment, the processor, when executing the computer program, further implements the following steps: a porosity of the corrosion product, a solid thermal conductivity of the corrosion product, and a liquid thermal conductivity of the coolant in the corrosion product are obtained; an average thermal conductivity of the corrosion product is determined based on the porosity, the solid thermal conductivity, and the liquid thermal conductivity.

In an embodiment, the processor, when executing the computer program, further implements the following steps: a thickness of the corrosion product is obtained; and a saturation temperature distribution of the corrosion product when the coolant is in the saturated state is determined based on the average thermal conductivity and the thickness, where the temperature distributions include the saturation temperature distribution.

In an embodiment, the processor, when executing the computer program, further implements the following steps: a wick boiling relation expression representing a relationship between the thickness of the corrosion product and the temperature within the corrosion product when the coolant is in the nucleate boiling state is obtained; a temperature distribution within the corrosion product under the nucleate boiling state is determined based on a thickness distribution of the corrosion product and the wick boiling relation expression, where the temperature distributions include the temperature distribution under the nucleate boiling state.

In an embodiment, the processor, when executing the computer program, further implements the following steps: a temperature relation expression representing a relationship between the thickness of the corrosion product and the temperature within the corrosion product, a flow velocity relation expression representing a relationship between the pressure within the corrosion product and the flow velocity of the coolant, and a concentration relation expression are determined; based on the temperature relation expression and the thickness of the corrosion product, the $n$-th temperature distribution in the corrosion product in the $n$-th iteration step and the ($n$+1)-th temperature distribution in the corrosion product in the ($n$+1)-th iteration step are determined, and a temperature difference value between the $n$-th temperature distribution and the ($n$+1)-th temperature distribution is determined, the $n$-th iteration step and the ($n$+1)-th iteration step are adjacent iteration steps; based on the flow velocity relation expression and the pressure in the corrosion product, the $n$-th flow velocity distribution of the coolant in the $n$-th iteration step and the ($n$+1)-th flow velocity distribution of the coolant in the ($n$+1)-th iteration step are determined, and a flow velocity difference value between the $n$-th flow velocity distribution and the ($n$+1)-th flow velocity distribution is determined; based on the concentration relation expression and the concentration of boric acid in the coolant, the $n$-th concentration distributions of other soluble substances in the n-th iteration step and the ($n$+1)-th concentration distribution of the coolant in the ($n$+1)-th iteration step are determined, and a concentration difference value between the $n$-th concentration distribution and the ($n$+1)-th concentration distribution is

EP 4 776 308 A1

determined; maximum difference values in the temperature difference value, the flow velocity difference value, and the concentration difference value are determined, and when the maximum difference values are less than preset difference thresholds respectively, the *n*-th flow velocity distribution is determined as the flow velocity distribution, the *n*-th temperature distribution is determined as the temperature distribution, and the *n*-th concentration distribution is determined as the concentration distribution of other soluble substances.

In an embodiment, the processor, when executing the computer program, further implements the following steps: a three-dimensional coordinate system relation expression representing the relationship between the thickness of the corrosion product and the temperature within the corrosion product when the coolant is in the dryout state is obtained; a dryout temperature distribution of the corrosion product is determined based on the thickness of the corrosion product and the three-dimensional coordinate system relation expression, the temperature distributions include the dryout temperature distribution.

It should be noted that the user information (including but not limited to user device information, user personal information, etc.) and data (including but not limited to data used for analysis, data stored, data displayed, etc.) involved in the present application are all information and data authorized by the user or fully authorized by all parties, and the collection, use and processing of the relevant data shall comply with the relevant laws, regulations and standards of the relevant countries and regions.

Those skilled in the art may understand that all or part of the processes in the above embodiments can be implemented by instructing related hardware with computer-readable instructions. The computer-readable instructions can be stored in a non-transitory computer-readable storage medium. When the computer-readable instructions are executed, the processes in the above embodiments of the method are included. Any references to memory, database, or other media used in the embodiments provided in the present application may include at least one of non-transitory memory and transitory memory. The non-transitory memory may include a read-only memory (ROM), a magnetic tape, a floppy disk, a flash memory, an optical memory, a high-density embedded non-transitory memory, a resistive random access memory (ReRAM), a magnetic random access memory (MRAM), a ferroelectric random access memory (FRAM), a phase change memory (PCM), a graphene memory, etc. The transitory memory may include a random access memory (RAM) or an external cache memory. By way of illustration and not limitation, RAM may take many forms, such as a Static Random Access Memory (SRAM) or a Dynamic Random Access Memory (DRAM). The databases involved in the various embodiments provided in the present application may include at least one of a relational database and a non-relational database. The non-relational database may include, but is not limited to, a blockchain-based distributed database. The processor involved in the various embodiments provided in the present application may be a general-purpose processor, a central processing unit, a graphics processor, a digital signal processor, a programmable logic device, a quantum computing-based data processing logic device, etc., which are not limited there.

The technical features in the above embodiments can be arbitrarily combined. In order to make the description concise, all possible combinations of the technical features in the above embodiments are not described. However, as long as there is no contradiction in the combinations of these technical features, these combinations should be regarded as falling within the scope of the present application.

The above-described embodiments merely express several implementation modes of the present application, and the description thereof is relatively specific and detailed, but it should not be construed as limiting the scope of the present application. It should be pointed out that those skilled in the art can make several modifications and improvements without departing from the concept of the present application, which all fall within the scope of protection of the present application. Therefore, the protection scope of the present application should be subject to the appended claims.

**Claims**

1. A heat and mass transfer analysis method for a corrosion product in a nuclear reactor, **characterized by** comprising:

   obtaining an average thermal conductivity of the corrosion product in the nuclear reactor, and determining temperature distributions in the corrosion product when a coolant in the corrosion product is in a saturated state, a nucleate boiling state, and a dryout state respectively based on the average thermal conductivity;
   determining a flow velocity distribution of the coolant in the corrosion product based on a pressure distribution in the corrosion product;
   obtaining a concentration relation expression representing a relationship between a concentration of boric acid and concentrations of other soluble substances in the coolant, and determining concentration distributions of other soluble substances based on the concentration relation expression and the concentration of boric acid; and
   analyzing a process of heat and mass transfer within the corrosion product based on the temperature distributions, the flow velocity distribution, and concentration distributions of soluble substances, obtaining a concentration of boron enriched within the corrosion product, and obtaining the total amount of boron deposited based on the concentration of the enriched boron, wherein the soluble substances comprise the boric acid and other soluble substances.

2. The method according to claim 1, wherein obtaining the average thermal conductivity of the corrosion product comprises:

> obtaining a porosity of the corrosion product, a solid thermal conductivity of the corrosion product, and a liquid thermal conductivity of the coolant in the corrosion product; and
> determining the average thermal conductivity of the corrosion product based on the porosity, the solid thermal conductivity, and the liquid thermal conductivity.

3. The method according to claim 1, wherein determining the temperature distribution in the corrosion product when the coolant in the corrosion product is in the saturated state based on the average thermal conductivity comprises:

> obtaining a thickness of the corrosion product; and
> determining a saturation temperature distribution of the corrosion product when the coolant is in the saturated state based on the average thermal conductivity and the thickness, wherein the temperature distributions comprise the saturation temperature distribution.

4. The method according to claim 1, wherein determining the temperature distribution in the corrosion product when the coolant in the corrosion product is in the nucleate boiling state based on the average thermal conductivity comprises:

> obtaining a wick boiling relation expression representing a relationship between a thickness of the corrosion product and a temperature within the corrosion product when the coolant is in the nucleate boiling state; and
> determining the temperature distribution within the corrosion product under the nucleate boiling state based on a thickness distribution of the corrosion product and the wick boiling relation expression, wherein the temperature distributions comprise the temperature distribution under the nucleate boiling state.

5. The method according to claim 1, further comprising:

> determining a temperature relation expression representing a relationship between a thickness of the corrosion product and a temperature within the corrosion product, a flow velocity relation expression representing a relationship between a pressure within the corrosion product and a flow velocity of the coolant, and a concentration relation expression;
> determining, based on the temperature relation expression and the thickness of the corrosion product, the $n$-th temperature distribution in the corrosion product in the $n$-th iteration step and the $(n+1)$-th temperature distribution in the corrosion product in the $(n+1)$-th iteration step, and determining a temperature difference value between the $n$-th temperature distribution and the $(n+1)$-th temperature distribution, wherein the $n$-th iteration step and the $(n+1)$-th iteration step are adjacent iteration steps, and $n$ is a positive integer;
> determining, based on the flow velocity relation expression and the pressure in the corrosion product, the $n$-th flow velocity distribution of the coolant in the $n$-th iteration step and the $(n+1)$-th flow velocity distribution of the coolant in the $(n+1)$-th iteration step, and determining a flow velocity difference value between the $n$-th flow velocity distribution and the $(n+1)$-th flow velocity distribution;
> determining, based on the concentration relation expression and the concentration of boric acid in the coolant, the $n$-th concentration distributions of other soluble substances in the n-th iteration step and the $(n+1)$-th concentration distribution of the coolant in the $(n+1)$-th iteration step, and determining a concentration difference value between the $n$-th concentration distribution and the $(n+1)$-th concentration distribution; and
> determining maximum difference values in the temperature difference value, the flow velocity difference value, and the concentration difference value, and when the maximum difference values are less than preset difference thresholds respectively, determining the $n$-th flow velocity distribution as the flow velocity distribution, the $n$-th temperature distribution as the temperature distribution, and the $n$-th concentration distribution as the concentration distributions of other soluble substances.

6. The method according to claim 1, wherein determining the temperature distribution in the corrosion product when the coolant in the corrosion product is in the dryout state based on the average thermal conductivity comprises:

> obtaining a three-dimensional coordinate system relation expression representing a relationship between a thickness of the corrosion product and a temperature within the corrosion product when the coolant is in the dryout state;
determining a dryout temperature distribution of the corrosion product based on the thickness of the corrosion product and the three-dimensional coordinate system relation expression, wherein the temperature distributions comprise the dryout temperature distribution.

7. A heat and mass transfer analysis apparatus for a corrosion product in a nuclear reactor, comprising:

a temperature distribution determination module, configured to obtain an average thermal conductivity of the corrosion product in the nuclear reactor, and determine temperature distributions in the corrosion product when a coolant in the corrosion product is in a saturated state, a nucleate boiling state, and a dryout state respectively based on the average thermal conductivity;
a flow velocity distribution determination module, configured to determine a flow velocity distribution of the coolant in the corrosion product based on a pressure distribution in the corrosion product;
a concentration distribution determination module, configured to obtain a concentration relation expression representing a relationship between a concentration of boric acid and concentrations of other soluble substances in the coolant, and determine concentration distributions of other soluble substances based on the concentration relation expression and the concentration of boric acid; and
an analysis module, configured to analyze a process of heat and mass transfer within the corrosion product based on the temperature distributions, the flow velocity distribution, and concentration distributions of soluble substances, obtain a concentration of boron enriched within the corrosion product, and obtain the total amount of boron deposited based on the concentration of the enriched boron, wherein the soluble substances comprise the boric acid and other soluble substances.

8. A computer device, comprising a processor and a memory storing a computer program, wherein the processor, when executing the computer program, implements steps of the method of any one of claims 1 to 6.

9. A computer-readable storage medium, on which a computer program is stored, wherein the computer program, when executed by a processor, causes the processor to implement steps of the method of any one of claims 1 to 6.

10. A computer program product, comprising a computer program, wherein the computer program, when executed by a processor, causes the processor to implement steps of the method of any one of claims 1 to 6.

FIG. 1

| an average thermal conductivity of the corrosion product in the nuclear reactor is obtained, and temperature distributions in the corrosion product when a coolant in the corrosion product is in a saturated state, a nucleate boiling state, and a dryout state respectively are determined based on the average thermal conductivity. | S202 |

| a flow rate distribution of the coolant in the corrosion product is determined based on a pressure distribution in the corrosion product | S204 |

| a concentration relation expression representing a relationship between concentrations of soluble substances in the coolant is obtained, and concentration distributions of other soluble substances are determined based on the concentration relation expression and the concentration of boric acid | S206 |

| a process of heat and mass transfer within the corrosion product is analyzed based on the temperature distributions, the flow rate distribution, and the concentration distributions of the soluble substances, a concentration of boron enriched within the corrosion product is obtained, and the total amount of boron deposited is obtained based on the concentration of the enriched born, where the soluble substances include the boric acid and other soluble substances | S208 |

FIG. 2

a temperature relation expression representing a relationship between the thickness of the corrosion product and the temperature within the corrosion product, a flow rate relation expression representing a relationship between the pressure within the corrosion product and the flow rate of the coolant, and a concentration relation expression are determined ⟋ S302

based on the temperature relation expression and the thickness of the corrosion product, the n-th temperature distribution in the corrosion product in the n-th iteration step and the (n+1)-th temperature distribution in the corrosion product in the (n+1)-th iteration step are determined, and a temperature difference value between the n-th temperature distribution and the (n+1)-th temperature distribution is determined ⟋ S304

based on the flow rate relation expression and the pressure in the corrosion product, the n-th flow rate distribution of the coolant in the n-th iteration step and the (n+1)-th flow rate distribution of the coolant in the (n+1)-th iteration step are determined, and a flow rate difference value between the n-th flow rate distribution and the (n+1)-th flow rate distribution is determined ⟋ S306

based on the concentration relation expression and the concentration of boric acid in the coolant, the n-th concentration distributions of other soluble substances in the n-th iteration step and the (n+1)-th concentration distribution of the coolant in the (n+1)-th iteration step are determined, and a concentration difference value between the n-th concentration distribution and the (n+1)-th concentration distribution is determined ⟋ S308

maximum difference values in the temperature difference value, the flow rate difference value, and the concentration difference value are determined, and when the maximum difference values are less than preset difference thresholds respectively, the n-th flow rate distribution is determined as the flow rate distribution, the n-th temperature distribution is determined as the temperature distribution, and the n-th concentration distribution is determined as the concentration distribution of the soluble substance ⟋ S310

the process of the heat and mass transfer within the corrosion product is analyzed based on the temperature distributions, the flow rate distribution, and the concentration distributions of the soluble substances, a concentration of boron enriched within the corrosion product is obtained, and the total amount of boron deposited is obtained based on the concentration of the enriched born ⟋ S208

FIG. 3

heat and mass transfer analysis apparatus for corrosion product in nuclear reactor

temperature distribution determination module — 402

flow rate distribution determination module — 404

concentration distribution determination module — 406

analysis module — 408

FIG. 4

memory

processor

internal storage

operating system

computer program

database

non-transitory storage medium

system bus

input/output interface

communication interface

computer device

FIG. 5

## INTERNATIONAL SEARCH REPORT

| International application No. |
| --- |
| **PCT/CN2024/077873** |

### A. CLASSIFICATION OF SUBJECT MATTER

G21C17/00(2006.01)i

According to International Patent Classification (IPC) or to both national classification and IPC

### B. FIELDS SEARCHED

Minimum documentation searched (classification system followed by classification symbols)

G21C17/-, G06F30/- (IPC)

Documentation searched other than minimum documentation to the extent that such documents are included in the fields searched

Electronic data base consulted during the international search (name of data base and, where practicable, search terms used)

CNTXT, ENTXTC, DWPI, CNKI: 反应堆, 腐蚀产物沉积, 热导率, 温度分布, 流速, 浓度, reactor, CRUD, chalk river unidentified deposit, thermal conductivity, temperature distribution, flow velocity, concentration

### C. DOCUMENTS CONSIDERED TO BE RELEVANT

| Category* | Citation of document, with indication, where appropriate, of the relevant passages | Relevant to claim No. |
| --- | --- | --- |
| A | CN 115859863 A (XI'AN JIAOTONG UNIVERSITY) 28 March 2023 (2023-03-28) description, paragraphs 0089-0158, and figures 1-4 | 1-10 |
| A | CN 116451526 A (XI'AN JIAOTONG UNIVERSITY) 18 July 2023 (2023-07-18) entire document | 1-10 |
| A | CN 116403656 A (SHANGHAI JIAO TONG UNIVERSITY) 07 July 2023 (2023-07-07) entire document | 1-10 |
| A | CN 112989651 A (XI'AN JIAOTONG UNIVERSITY) 18 June 2021 (2021-06-18) entire document | 1-10 |
| A | CN 109036598 A (NUCLEAR POWER INSTITUTE OF CHINA) 18 December 2018 (2018-12-18) entire document | 1-10 |
| A | US 2015092901 A1 (AREVA NP INC.) 02 April 2015 (2015-04-02) entire document | 1-10 |

☐ Further documents are listed in the continuation of Box C.          ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **02 December 2024** | **06 December 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2024/077873**

| Patent document cited in search report | | | Publication date (day/month/year) | Patent family member(s) | | | Publication date (day/month/year) |
|---|---|---|---|---|---|---|---|
| CN | 115859863 | A | 28 March 2023 | None | | | |
| CN | 116451526 | A | 18 July 2023 | None | | | |
| CN | 116403656 | A | 07 July 2023 | None | | | |
| CN | 112989651 | A | 18 June 2021 | None | | | |
| CN | 109036598 | A | 18 December 2018 | None | | | |
| US | 2015092901 | A1 | 02 April 2015 | WO | 2015048667 | A1 | 02 April 2015 |
| | | | | US | 9721680 | B2 | 01 August 2017 |
| | | | | ES | 2685616 | T3 | 10 October 2018 |
| | | | | EP | 3053170 | A1 | 10 August 2016 |
| | | | | EP | 3053170 | B1 | 11 July 2018 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311017699